# EUROPEAN PATENT SPECIFICATION

(11) **EP 3 372 192 B1**
(45) Date of publication and mention of the grant of the patent: **11.11.2020**
(21) Application number: 18161215.1
(22) Date of filing: 12.03.2018
(51) Int. Cl.: A61C 13/00, B23Q 1/25

(54) **DENTAL BLANK POSITIONING DEVICE**
ZAHNROHLINGPOSITIONIERUNGSVORRICHTUNG
DISPOSITIF DE POSITIONNEMENT D'ÉBAUCHE DENTAIRE

(30) Priority: 10.03.2017 US 201762469995 P
(43) Date of publication of application: 12.09.2018
(73) Proprietor: Global Dental Science LLC, Scottsdale, AZ 85260 (US)
(72) Inventor: GROBBEE, Johannes Petrus Michael, 5013 EA Tilburg (NL)
(74) Representative: V.O.

(56) References cited:
- EP-A1- 1 798 459
- EP-A1- 2 403 427
- EP-A1- 3 216 420
- EP-A1- 3 284 438
- EP-A1- 3 332 738
- DE-A1-102006 023 673
- DE-U1-202010 001 125
- US-A1- 2013 216 323
- US-A1- 2014 147 225

## Description

### Field of Invention

The present invention relates to dental material blanks. More particularly, the present invention relates to positioning dental material blanks in a holder of a manufacturing apparatus in a stable and repeatable manner.

### Background of the Invention

In the field of Cad/Cam in dentistry and specifically known as digital dentistry, one difficulty faced by machine operators is the task of mounting a material blank (usually a puck-shaped material used for making a dental prosthesis) in a manufacturing apparatus like a milling machine. In certain cases the blank must be machined in multiple steps. In some new techniques, a dental prosthetic may include multiple layers of different materials, adding additional challenges to the accuracy of manufacturing the prosthetic from the material blank. In these circumstances, a maker of dental prosthetics must position the blank in the machine holder multiple times, creating opportunities to misalign the blank or otherwise create inaccuracies.

It is therefore an objective to create an accurate and repeatable position of the blank. It is further an objective to provide a simple tool that assists those manufacturing dental prosthetics to handle and position a material blank. It is a further objective to provide a solution that enables accurate manufacturing of a multiple layered dental prosthetic. It is even further an objective to enable repeatable, accurate management of positioning a material blank during the addition of layers of different materials.

Known solutions are disclosed in e.g. EP 2 403 427 A1 (EP'427), EP 3 216 420 A1 (EP'420), DE 10 2006 023 673 A1 (DE'673), and EP 3 284 438 A1 (EP '438), DE 20 2010 001125 U.

EP'427 discloses a billet holder 100 having a base 10 and a connectable frame 20. The billet holder is to retain the billet (or dental blank). The base 10 is provided with supporting ledges or fingers 18 to support-a first side of the billet. The frame 20 provides further fingers or ledges 28 for supporting a second side of the billet. The billet (or dental blank) has orientation and locating features, making the billet asymmetrical about all rotational axes. In essence the billet is D-shaped.

EP'420 discloses an assembly 5 with at least two blanks 1, 2 and a holding device 3 for clamping the two blanks 1, 2. The two blanks 1, 2 each have a front side V forming first side and each have a rear side R forming second side. In the clamped state, the two blanks 1, 2 are facing each other with the back sides R, and substantially the complete front sides V of the blanks 1,2 are accessible.

DE'673 discloses a milling device for the production of dental prostheses comprising a holder 15 for receiving a dental blank. The positioning of the blank is done by a positioning mandrel (Positionierdorn) 19. The blank is provided with a cavity (Ausnahme) 26 in which said positioning mandrel 19 is placed.

EP'438 discloses a mill blank 1 for installation in a holding portion of a CAD/CAM device, wherein. The mill blank 1 has at least one notched portion 3 in a circumference portion. The holding portion is provided with a positioning portion 7. The positioning portion 7 is fitted in the notched portion 3 of the mill blank to position the mill blank for dental CAD/CAM.

### Summary of the Invention

The invention provides a system according to claim 1 for positioning dental blanks in a manufacturing apparatus. In particular, the system comprises:
a dental blank holder for the manufacturing apparatus and comprising an index chamber; and
a dental blank positioning device capable of being secured to a dental blank around a circumferential perimeter of the dental blank, the dental blank position device comprising:
   an interior side corresponding to the dental blank and an exterior side generally corresponding to the dental blank holder,
   an index element extending outwardly of the exterior side, whereby a portion of the index element rests against the index chamber of the dental blank holder, wherein the index chamber is capable of receiving at least a portion of the index element of the dental blank positioning device, wherein the index element comprises a bolt and nut assembly, whereby at least a portion of the assembly seats within a said index chamber of the blank holder.

In an embodiment of the invention, the system for positioning dental blanks in a blank holder for a manufacturing apparatus may further comprise a dental material blank for use with the blank positioning device, the blank positioning device being adjacent to at least a portion of the material blank; further comprising a dental material blank for use with the blank positioning device, the blank positioning device mating within a groove of at least a portion of the material blank; further comprising a dental material blank for use with the blank positioning device, the blank positioning device mating to at least a portion of an outwardly protruding of the material blank.

### Brief Description of the Drawings

A more complete understanding of the present invention may be derived by referring to the detailed description and claims when considered in connection with the Figures, where like reference numbers refer to similar elements throughout the Figures, and:
FIG. 1a shows a top plan view, and FIG. 1b shows a perspective view, and FIG 1c shows a side view of a dental blank 1 with a blank positioning device 2. The blank positioning device 2 has an index feature 3.
FIG. 2a shows a top plan view, and FIG 2b shows a perspective view of the dental blank 1 with the blank positioning device 2 with the index feature 3 positioned in the blank holder 4.
FIG. 3a shows a top plan view, and FIG 3b shows a more detailed view of the same view of the index feature 3 positioned in the blank holder 4. The index feature 3 may be in contact with the holder 4 on the index position 5.
FIG. 4a shows a top plan view, and FIG. 4b shows a more detailed view of a different embodiment of index feature 3. In this embodiment the blank positioning device 2 may be shrink-fitted or glued around the dental blank 1. The index position 5 between the blank holder 4 and index feature 3 are examples of various possible shapes of an index feature 3 and blank holder 4.
FIG. 5a-d shows multiple views of a different embodiment of index feature 3. In this example the index feature 3 consists of a pin that be received in a chamber in the blank holder 4 to create its unique index position. FIG 5a shows a top plan view of the inventive device. FIG 5b depicts a side view of the inventive device. FIG. 5c shows a perspective view of the inventive device. FIG 5d shows a cross section view of the view seen in FIG 5b.
FIG. 6a-f shows top plan and cross sectional view of different embodiments of how the positioning device 2 may fit around the dental blank 1. An inventive embodiment of the positioning device is illustrated as flush to the material blank as seen in 6a and 6b, in a groove of the blank as in Figure 6c and Figure 6d or on a rim as in Figure 6e and Figure 6f.

### Detailed Description of Exemplary Embodiments of the Invention

The present invention may be described herein in terms of various components. It should be appreciated that such components may be realized by any number of structural materials and components configured to perform the specified functions. For example, the present invention may be practiced in any number of dental contexts and the exemplary embodiments relating to positioning dental material blanks in a manufacturing apparatus are merely a few of the exemplary applications for the invention. For example, the principles, features and methods discussed may be applied to any crown and bridge restorative dentistry or prosthetic dentistry application.

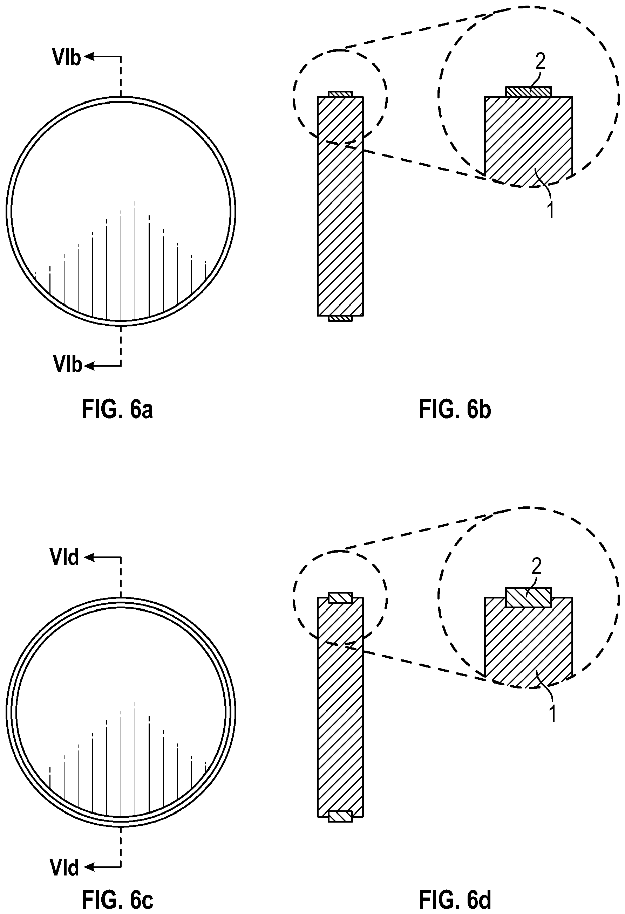

In accordance with various aspects of the present invention, a generic dental blank Positioning device is provided to allow an easy, repeatable and accurate placement of a dental blank in a holder of a manufacturing apparatus. Dental blanks may be made in a unique shape for a certain manufacturing device or made in a generic universal shape (for instance, in approximately 98.5 mm diameter) and in various thicknesses. In the case a blank requires to be positioned multiple times in the holder of a manufacturing device, the blank may be designed or later modified with one or more notches or other geometrical features to have a unique position in the holder of the manufacturing device. The notches may mate with the holder directly or indirectly. To avoid unique combinations of blank and holder and to reduce the manufacturing costs of a blank, a generic blank positioning device is provided that may be used on all generically - shaped blank. Other material blanks, as exemplified in Figs. 6c-f, may be incorporated with customized aspects as desired for other unexpected synergies in positioning the material blanks in blank holders.

In accordance with an exemplary embodiment, the blank positioning device may be made of a variety of materials commonly known in the industry like steel or plastics. Other materials known in the arts to interact without dental prosthetic materials are well within the scope of this invention.

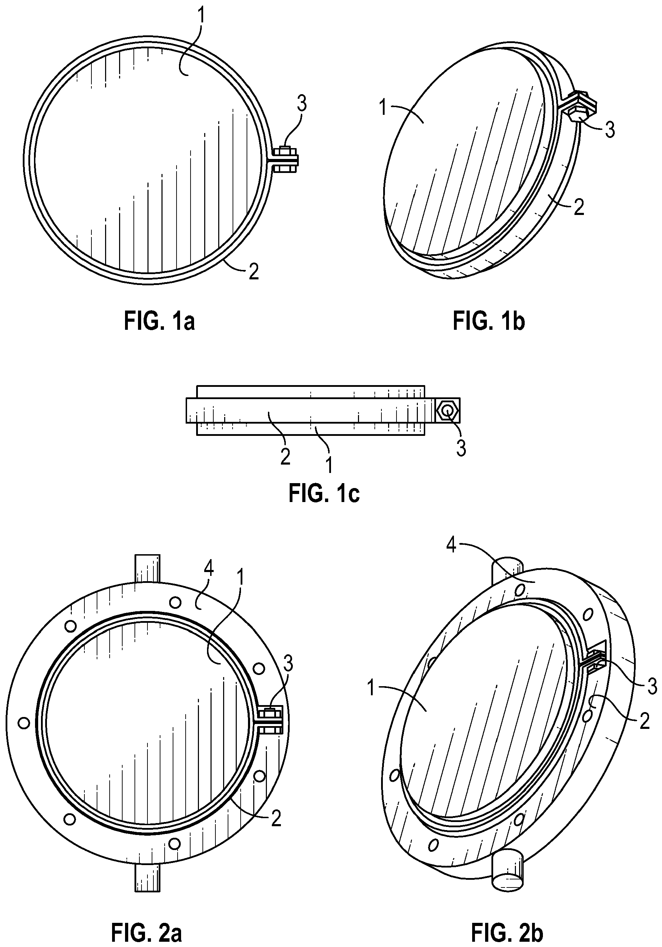

For example, with reference to an exemplary embodiment illustrated in Fig. 1a, Fig. 1b and Fig 1c, the blank positioning device 2 may be clamped around the dental blank by tightening the bold and nut 3. The bold and nut may serve at least two purposes: first to clamp the positioning device 2 around the blank 1 and second to create the index feature 3. Other clamping mechanisms or assemblies known in the arts to stabilize, grasp, or otherwise provide a handle to an object are well within the scope of the invention. As further explored in Figs. 6c-f, other tools for handling grooved or rimmed objects may be available within the scope of this invention.

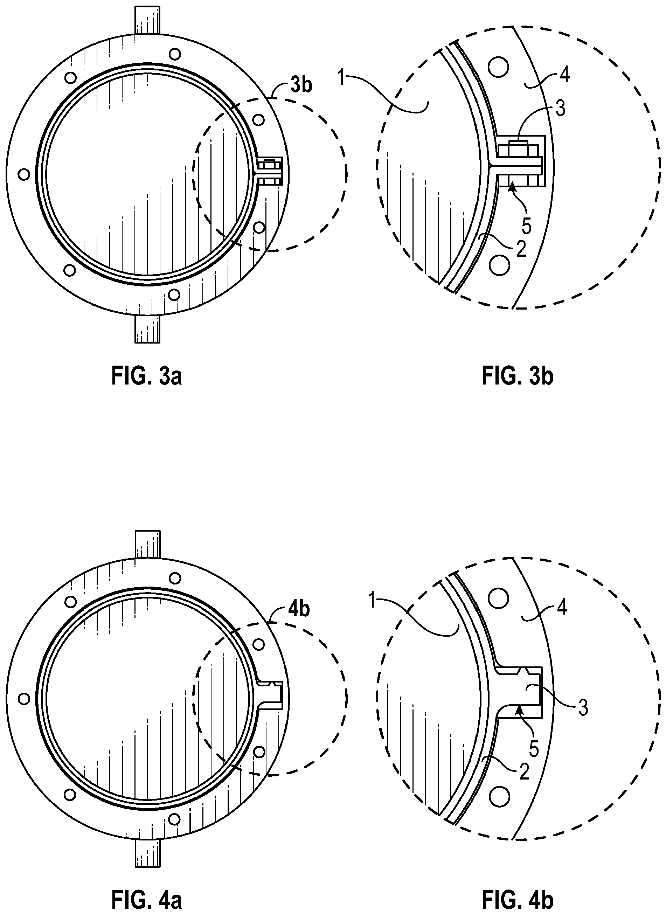

With reference to an exemplary embodiment illustrated in Fig. 2a and Fig 2b, positioning device 2 may be clamped around the dental blank 1 and positioned in the holder 4. This position is further illustrated in Fig. 3a and Fig. 3b, with index feature 3 interacting with blank holder 4 at index position 5. According to inventive methods, the dental blank 1 with the mounted positioning device 2 may be removed from the holder 4 and placed back in the holder at a later stage at the same position. The unique index position 5 can be later located accurately by touching or seating the index feature 3 to the holder 4 at the index position 5. In other embodiments of the invention, the index feature may be held at a set distance or otherwise indirectly positioned at a set relationship from the index position rather than directly touching. In still other embodiments, the holder 4 may have multiple chambers for secondary securement/locking.

With reference to an exemplary embodiment illustrated in FIG. 4a and 4b, the positioning device 2 may be secured about the blank 1 utilizing a shrink fit method and material. In other embodiments the positioning device 2 may be secured by use of a material - appropriate glue as understood in the arts, depending upon the type of material blank. An exemplary embodiment of index feature 3 as seen in Fig. 4b may create an index position 5 with the blank holder 4. The index feature or element 3 is shown as having an abutment element that extends towards an internal wall of a chamber of the blank holder 4, or the index receiving feature. In alternative designs, the abutment element may resemble any number of geometric configurations, having linear or curved portions.

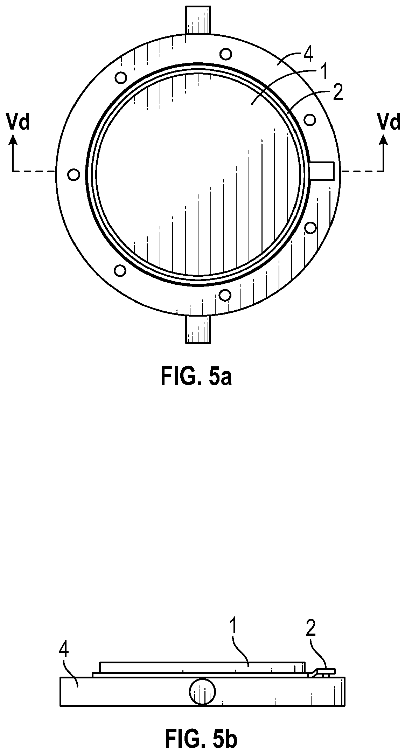

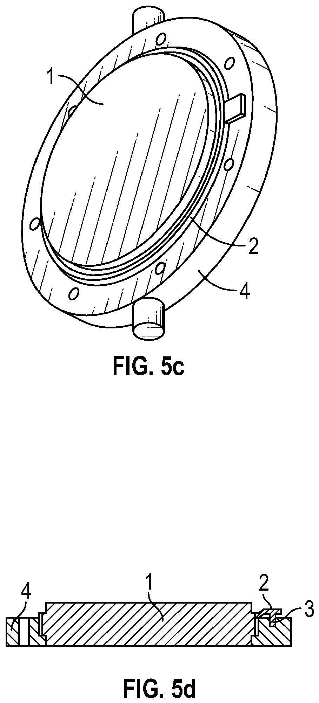

For example, with reference to an exemplary embodiment illustrated in FIG. 5a through 5d, the index feature 3 may resemble a pin securing into a chamber in blank holder 4. In this embodiment, the positioning device 2 comprises an arm extending distally from the blank 1 so that it may be held above or supra the blank holder 4. Index feature or element 3 in this embodiment then extends downward from the positioning device 2 into a generally complementary chamber or index receiving feature of the blank holder 4, securing and recording the position of the blank for future reference and later modifications of the material blank that would benefit from consistent positioning. For instance, CAD CAM or other software that automates a milling process of the material blank for multiple layers of a dental prosthesis may be improved by the ability to begin with a set position of the material blank. In alternative embodiments within the scope of the invention, the positioning device, indexing element, and index receiving chamber may vary from that depicted in illustrations, having a scope that includes structures of alternative geometric and volumetric configurations having linear or curved portions that may seat downward or upward into a chamber of the holder 4.

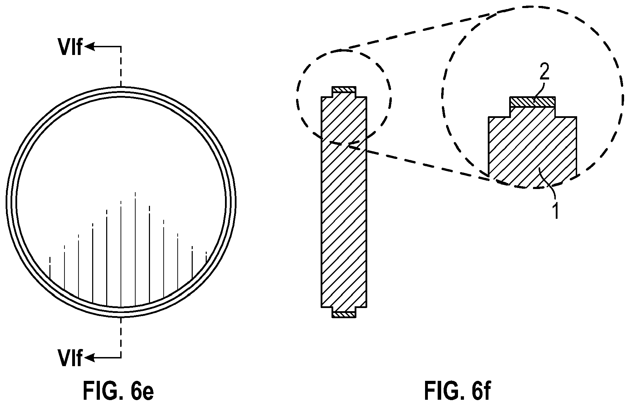

For example, with reference to an exemplary embodiment illustrated in FIGs. 6a-f as alternative embodiments of how the positioning device 2 may be positioned around the dental blank 1 are depicted. FIG. 6a-f illustrates different embodiments of how the positioning device 2 may fit about the dental blank 1. Positioning device 2 is shown as being flush to the material blank 1 as seen in 6a and 6b. The material blank 1 in this embodiment may meet the positioning device without modification, so standard shaped blanks are available for implementation in the inventive device and method of using thereof. In an alternative embodiment of the invention for the relationship of the positioning device to the material blank, Figs. 6c - 6d depict a material blank 1 that has been modified to include a groove into which the positioning device 2 may mate. Material blank 1 may be manufactured to have a groove or other concave indentation, or as part of an after-market modification. Other variations of this embodiment are within the scope of the invention, such as an indentation into the blank that includes any type of geometric shapes, including linear and curved, and complementary structures on the positioning device 2. In still another alternative embodiment of the invention regarding the relationship of the positioning device to the material blank, the material blank 1 may include an external element such as a rim as depicted in Figure 6e and Figure 6f. Material blank 1 may be manufactured to have an external element or it may have one added as part of an after-market modification. Other variations of this embodiment are within the scope of the invention, such as an external element that includes any type of geometric shapes including linear and curved, and complementary structures on the positioning device 2.

The positioning device 2 may be secured to the blank 1 by a bold and nut assembly, shrink fit, friction fit, glued, or other methods known in the arts to secure to a prosthetic material. Other methods of detachably affixing positioning device to blank, not illustrated, are within the scope of the invention. As illustrated in Figures 6c-f, the position to the blank may be in a notch, flush or on a rim of either the material blank, the positioning device, or a combination thereof.

## Claims

1. A system for positioning dental blanks (1) in a manufacturing apparatus, the system comprising:
a dental blank holder (4) for positioning a dental blank (1) in the manufacturing apparatus and comprising an index chamber; and
a dental blank positioning device (2) capable of being secured to a dental blank (1) around a circumferential perimeter of the dental blank (1), the dental blank position device (2) comprising:
an interior side corresponding to the dental blank (1) and an exterior side generally corresponding to the dental blank holder (4),
an index element (3) extending outwardly of the exterior side, whereby a portion of the index element (3) rests against the index chamber of the dental blank holder (4), wherein the index chamber is capable of receiving at least a portion of the index element (3) of the dental blank positioning device (2), wherein the index element (3) comprises a bolt and nut assembly (3), whereby at least a portion of the assembly (3) seats within said index chamber of the blank holder (4).

2. The system according to claim 1, wherein the dental blank positioning device (2) comprises two or more index elements (3).

3. The system according to claim 1, whereby the dental blank positioning device (2) is securable to the dental blank (1) through a clamping, shrink fit or glued around the dental blank (1).

4. The system according to claim 1, wherein the dental blank positioning device (2), when placed in the blank holder (4), extends in a direction either above or below the blank holder (4), whereby a portion of the index element (3) seats into the dental blank holder (4) in a direction opposite of the direction wherein the blank positioning device (2) extends above or below the blank holder (4).

5. The system according to claim 4, whereby the portion of the index element (3) tapers from the blank positioning device (2) to a terminal point of the index chamber (3).

6. The system according to claim 1, whereby a position of the index element (3) is congruent with the index chamber.

7. The system according to claim 1 or 6, wherein the index element (3) further comprises linear or curved portions.

8. The system according to any one of claims 1, 6 and 7, the index chamber further comprising linear or curved portions.

9. The system according to any one of claims 1 and 6-8, further comprising:
a dental material blank (1) for use with the blank positioning device (2), the blank positioning device (2) being adjacent to at least a portion of the material blank (1).

10. The system according to any one of claims 1 and 6-8 further comprising:
a dental material blank (1) for use with the blank positioning device (2), the blank positioning device (2) mating within a groove of at least a portion of the dental material blank (1).

11. The system according to any one of claims 1 and 6 - 10 further comprising:
a dental material blank (1) for use with the blank positioning device (2), the blank positioning device (2) mating to at least a portion of an outward protrusion of the material blank (1).

## Patentansprüche

1. System zum Positionieren von Zahnrohlingen (1) in einer Herstellungsvorrichtung, wobei das System umfasst:
einen Zahnrohlinghalter (4) zum Positionieren eines Zahnrohlings (1) in der Herstellungsvorrichtung und umfassend eine Indexkammer; und
eine Zahnrohling-Positionierungsvorrichtung (2), die an einem Zahnrohling (1) um einen Umfangsumfang des Zahnrohlings (1) befestigt werden kann, wobei die Zahnrohling-Positionierungsvorrichtung (2) umfasst:
eine Innenseite, die dem Zahnrohling (1) entspricht, und eine Außenseite, die im Allgemeinen dem Zahnrohlinghalter (4) entspricht,
ein Indexelement (3), das sich nach außen von der Außenseite erstreckt, wobei ein Teil des Indexelements (3) an der Indexkammer des Zahnrohlinghalters (4) anliegt, wobei die Indexkammer wenigstens einen Teil des Indexelements (3) der Zahnrohling-Positionierungsvorrichtung (2) aufnehmen kann, wobei das Indexelement (3) eine Bolzen- und Mutteranordnung (3) umfasst, wobei wenigstens ein Teil der Anordnung (3) in der Indexkammer des Rohlinghalters (4) sitzt.

2. System nach Anspruch 1, wobei die Zahnrohling-Positionierungsvorrichtung (2) zwei oder mehr Indexelemente (3) umfasst.

3. System nach Anspruch 1, wobei die Zahnrohling-Positionierungsvorrichtung (2) durch Klemmen, Schrumpfen oder Umkleben des Zahnrohlings (1) am Zahnrohling (1) befestigt werden kann.

4. System nach Anspruch 1, wobei sich die Zahnrohling-Positionierungsvorrichtung (2), wenn sie in den Rohlinghalter (4) eingesetzt wird, in einer Richtung entweder über oder unter dem Rohlinghalter (4) erstreckt, wobei ein Teil des Indexelements (3) in dem Zahnrohlinghalter (4) in einer Richtung entgegengesetzt zu der Richtung sitzt, wobei sich die Rohling-Positionierungsvorrichtung (2) über oder unter dem Rohlinghalter (4) erstreckt.

5. System nach Anspruch 4, wobei sich der Teil des Indexelements (3) von der Rohling-Positionierungsvorrichtung (2) zu einem Endpunkt der Indexkammer (3) verjüngt.

6. System nach Anspruch 1, wobei eine Position des Indexelements (3) mit der Indexkammer kongruent ist.

7. System nach Anspruch 1 oder 6, wobei das Indexelement (3) ferner lineare oder gekrümmte Teile umfasst.

8. System nach einem der Ansprüche 1, 6 und 7, wobei die Indexkammer ferner lineare oder gekrümmte Teile umfasst.

9. System nach einem der Ansprüche 1 und 6 bis 8, ferner umfassend:
einen Zahnmaterialrohling (1) zur Verwendung mit der Rohling-Positionierungsvorrichtung (2), wobei die Rohling-Positionierungsvorrichtung (2) an wenigstens einen Teil des Materialrohlings (1) angrenzt.

10. System nach einem der Ansprüche 1 und 6 bis 8, ferner umfassend:
einen Zahnmaterialrohling (1) zur Verwendung mit der Rohling-Positionierungsvorrichtung (2), wobei die Rohling-Positionierungsvorrichtung (2) in eine Nut von wenigstens einem Teil des Zahnmaterialrohlings (1) passt.

11. System nach einem der Ansprüche 1 und 6 bis 10, ferner umfassend:
einen Zahnmaterialrohling (1) zur Verwendung mit der Rohling-Positionierungsvorrichtung (2), wobei die Rohling-Positionierungsvorrichtung (2) zu wenigstens einem Teil eines nach außen ragenden Vorsprungs des Materialrohlings (1) passt.

## Revendications

1. Système de positionnement d'ébauches dentaires (1) dans un appareil de fabrication, le système comprenant :
un support d'ébauche dentaire (4) pour positionner une ébauche dentaire (1) dans l'appareil de fabrication et comprenant une chambre d'indexation ; et
un dispositif de positionnement d'ébauche dentaire (2) capable d'être fixé à une ébauche dentaire (1) autour d'un périmètre circonférentiel de l'ébauche dentaire (1), le dispositif de positionnement d'ébauche dentaire (2) comprenant :
un côté intérieur correspondant à l'ébauche dentaire (1) et un côté extérieure correspondant généralement au support d'ébauche dentaire (4),
un élément d'indexation (3) s'étendant vers l'extérieur du côté extérieur, de telle sorte qu'une partie de l'élément d'indexation (3) est en appui contre la chambre d'indexation du support d'ébauche dentaire (4), dans lequel la chambre d'indexation est capable de recevoir au moins une partie de l'élément d'indexation (3) du dispositif de positionnement d'ébauche dentaire (2), dans lequel l'élément d'indexation (3) comprend un ensemble de boulon et d'écrou (3), de telle sorte qu'au moins une partie de l'ensemble (3) siège à l'intérieur de ladite chambre d'indexation du support d'ébauche (4).

2. Système selon la revendication 1, dans lequel le dispositif de positionnement d'ébauche dentaire (2) comprend au moins deux éléments d'indexation (3).

3. Système selon la revendication 1, dans lequel le dispositif de positionnement d'ébauche dentaire (2) peut être fixé à l'ébauche dentaire (1) par serrage, ajustement par contraction ou collage autour de l'ébauche dentaire (1).

4. Système selon la revendication 1, dans lequel le dispositif de positionnement d'ébauche dentaire (2), lorsqu'il est placé dans le support d'ébauche (4), s'étend dans une direction au-dessus ou au-dessous du support d'ébauche (4), de telle sorte qu'une partie de l'élément d'indexation (3) siège dans le support d'ébauche dentaire (4) dans une direction à l'opposé de la direction dans laquelle le dispositif de positionnement d'ébauche (2) s'étend au-dessus ou au-dessous du support d'ébauche (4).

5. Système selon la revendication 4, dans lequel la partie de l'élément d'indexation (3) est effilée depuis le dispositif de positionnement d'ébauche (2) jusqu'à un point terminal de la chambre d'indexation (3).

6. Système selon la revendication 1, dans lequel une position de l'élément d'indexation (3) coïncide avec la chambre d'indexation.

7. Système selon la revendication 1 ou 6, dans lequel l'élément d'indexation (3) comprend en outre des parties linéaires ou incurvées.

8. Système selon l'une quelconque des revendications 1, 6 et 7, la chambre d'indexation comprenant en outre des portions linéaires ou incurvées.

9. Système selon l'une quelconque des revendications 1 et 6 à 8, comprenant en outre :
une ébauche de matériau dentaire (1) à utiliser avec le dispositif de positionnement d'ébauche (2), le dispositif de positionnement d'ébauche (2) étant adjacent à au moins une partie de l'ébauche de matériau (1).

10. Système selon l'une quelconque des revendications 1 et 6 à 8 comprenant en outre :
une ébauche de matériau dentaire (1) à utiliser avec le dispositif de positionnement d'ébauche (2), le dispositif de positionnement d'ébauche (2) s'appariant dans une rainure d'au moins une partie de l'ébauche de matériau dentaire (1).

11. Système selon l'une quelconque des revendications 1 et 6 à 10 comprenant en outre :
une ébauche de matériau dentaire (1) à utiliser avec le dispositif de positionnement d'ébauche (2), le dispositif de positionnement d'ébauche (2) s'appariant à au moins une partie d'une saillie vers l'extérieur de l'ébauche de matériau (1).
